Europäisches Patentamt

European Patent Office

Office européen des brevets

(11) Publication number: **0 381 032**
**A2**

(12) **EUROPEAN PATENT APPLICATION**

(21) Application number: **90101396.1**

(22) Date of filing: **24.01.90**

(51) Int. Cl.5: **B01D 25/02, B01D 25/26, B01D 24/04**

(30) Priority: **02.02.89 IT 1929289**

(43) Date of publication of application:
**08.08.90 Bulletin 90/32**

(84) Designated Contracting States:
**AT BE CH DE ES FR GB IT LI NL SE**

(71) Applicant: **Carriero, Antonio**
**Via Alessandro Volta 28**
**I-22036 Erba (Como)(IT)**

Applicant: **Chiaia, Lucio**
**Via Alessandro Volta 28**
**I-22036 Erba (Como)(IT)**

(72) Inventor: **Carriero, Antonio**
**Via Alessandro Volta 28**
**I-22036 Erba (Como)(IT)**
Inventor: **Chiaia, Lucio**
**Via Alessandro Volta 28**
**I-22036 Erba (Como)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Filter body with modular elements.**

(57) This filter body comprises a plurality of mutually stackable modules (2). Each of the modules defines at least one first filtering region (15) which has a first connecting port (10) for the inflow of the fluid to be filtered and is connected to the first filtering region of the adjacent modules, and at least one second filtering region (20) which defines a second connection port (22) for the outflow of the filtered fluid and is connected to the second filtering region of the adjacent modules. The first region (15) and the second region (20) are mutually connected with the interposition of at least one filtering element (20).

Fig.8

# FILTER BODY WITH MODULAR ELEMENTS

The present invention relates to a filter body with modular elements for filtering fluids in general.

As is known, a currently strongly felt problem is related to the filtration of liquids and in particular the filtration of liquids derived from industrial processes. This problem is currently solved using filters which are manufactured according to the most disparate configurations and criteria.

For example, disk filters are used in the industrial field and are constituted by a plurality of disk-shaped filtering elements which are retained between flanges and are arranged mutually in succession so as to perform filtration.

Said filters must be inserted in containers which act as outer receptacles for defining the filtration chambers.

Other filters have a plurality of groups arranged side-by-side for performing the filtration steps.

All known filters are currently manufactured by using various groups or elements which must be mutually assembled and must be produced in each instance according to the contingent requirements, so as to adapt to the different required filtration flow rates and to the different kind of filtration to be performed.

The aim of the invention is indeed to eliminate the above described disadvantages by providing a filter body with modular elements which allows to vary the filtering element in order to adapt to the required filtration characteristics without having to change the filter structure.

Within the scope of the above described aim, a particular object of the invention is to provide a filter body which allows to increase the potentiality of the filter without thereby having to provide diversified structures.

Another object of the present invention is to provide a filter body which, for an equal overall bulk, has a considerably increased filtering surface, thus contributing to a significant increase in the flow-rate obtainable by said filter.

Not least object of the present invention is to provide a filter body which can be easily obtained starting from commonly commercially available materials and which is furthermore competitive from a merely economical point of view.

The above described aim, as well as the objects mentioned and others which will become apparent hereinafter, are achieved by a filter body with modular elements, as defined by the features of claim 1.

The characteristics and advantages will become apparent from the description of a preferred but not exclusive embodiment of a filter body with modular elements for filtering fluids in general, illustrated only by way of non-limitative example in the accompanying drawings, wherein:

figure 1 is a schematic side view of a filter body obtained by assembling a plurality of modules;

figure 2 is a perspective view of a module seen from above;

figure 3 is a perspective view of a module seen from above with tampon-like filtering elements partially inserted;

figure 4 is a perspective view of the module taken from below;

figure 5 is a view of possible configurations of the filtering elements obtained with porous masses;

figure 6 is a partially sectional top plan view of the filtering element;

figure 7 is a bottom plan view of a module;

figure 8 is a sectional view of a portion of filtering body, taken along the line VIII-VIII of figure 6, with different cutouts at the various modules, so as to point out the constructive details;

figure 9 is a schematic sectional view taken along the line IX-IX of figure 6.

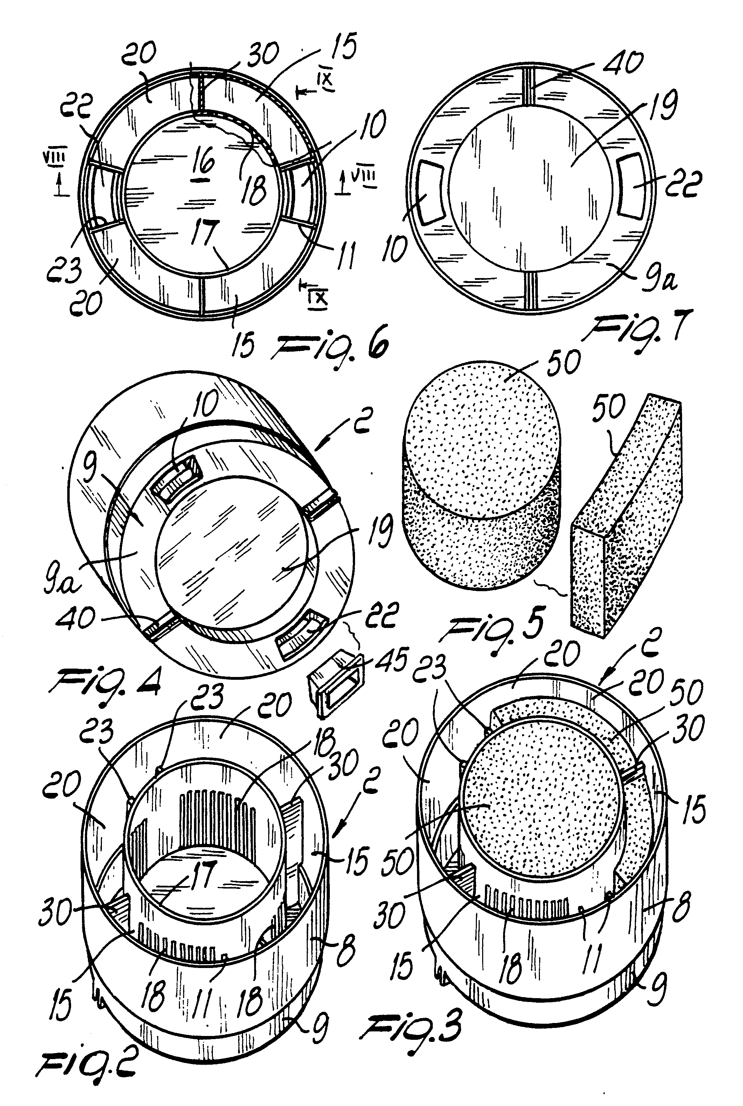

With reference to the above figures, the filtering body with modular elements, generally indicated by the reference numeral 1, is constituted by a plurality of modules 2 which are mutually stackable as schematically illustrated in figure 1 and which are connected, at the axial ends of the stack, to an inflow manifold 3 and to an outflow manifold 4.

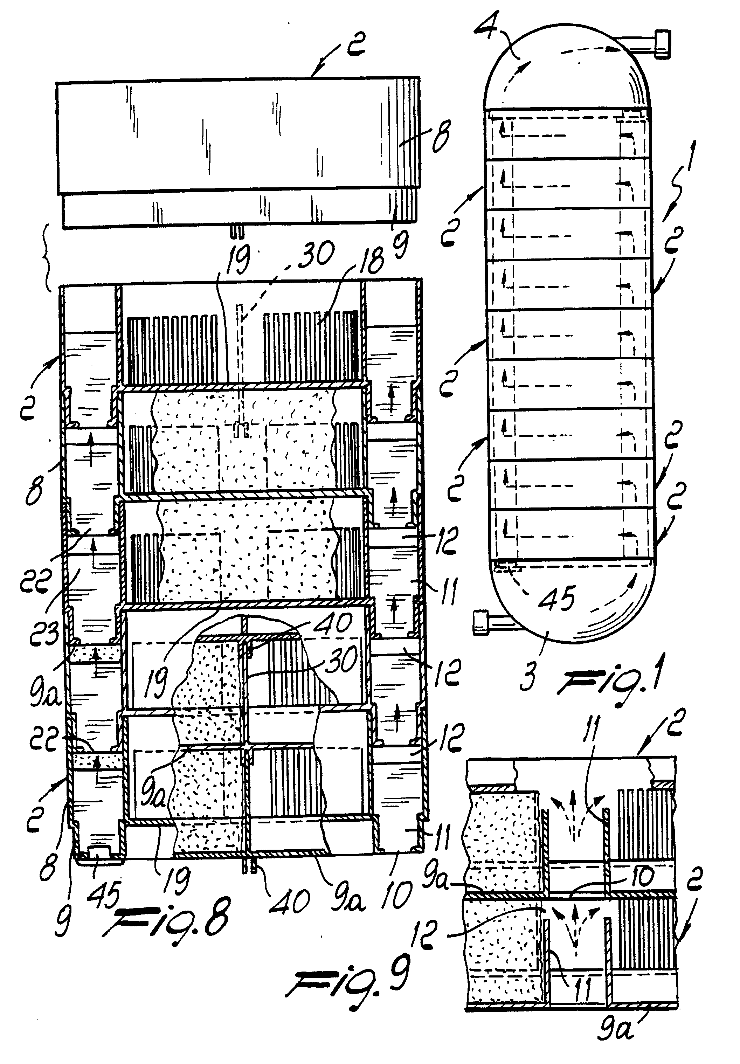

Each module, as more clearly shown in figures 2 to 6, has a cylindrical body 8 which is provided, at its lower part, with an annular depression 9 which has a smaller outer diameter than the upper part of the body 8 and can be inserted at the upper end of the underlying module so as to obtain stacking.

The modules can be assembled with the interposition of sealing gaskets if the modules are to be disassembled for maintenance, or possibly with the interposition of adhesive materials or appropriate weldings so as to create a monolithic unit.

Each module internally defines a first connection port which is open at the lower part of the module and is delimited by lateral walls 11 which extend upward for an amount which is smaller than the axial extension of the cylindrical body 3 and in particular is smaller than the axial extension of the larger diameter portion of cylindrical body 3, so as to define openings 12 which extend between the upper edge of the walls 11 and the bottom 9a of depression 9 of the upper stacked module so as to connect the first port 10 to two first filtering regions, indicated at 15, which preferably have each the configuration of a portion of annular crown.

The filtering regions 15 are connected to an intermediate filtering region 16 with a circular configuration by passage ports 18 formed in a circular wall 17.

The intermediate filtering region 16 is connected, by means of ports again indicated at 18, to second filtering regions 20 which are diametrically opposite to first regions 15 and also have the configuration of portions of annular crown and are connected to a second outflow port indicated at 22 and formed in the depressed bottom 9a, said second port 22 being delimited by outflow walls 23 which have the same height as the walls 11.

Diametrical separating partitions 30 are provided between the first regions 15 and the second regions 20 and do not allow the liquid to be filtered to pass directly from the first regions to the second ones but force it to flow through the intermediate filtering region 16.

The intermediate filtering region 16 is provided with a closure bottom 19 offset with respect to depressed bottom 9a, so that chambers which are mutually separated along horizontal planes are obtained by mutually stacking the various modules.

Fork-like protrusions 40 are furthermore provided on the depressed bottom 9a of each module at said partitions and arrange themselves astride the partitions of the lower module when the modules are stacked, thus providing a sealed separation between the first and second regions of the stacked modules.

Filtering elements can be inserted in the filtering regions; said elements may be of various kinds and of various nature according to the kind of filtering to be performed; thus, for example, as schematically indicated in figure 5, it is possible to provide tampons or blocks 50 of foamed plastic material with different porosity which can be inserted in the intermediate region 16 and in the first 15 and second 20 filtering region; the porosity is naturally a function of the degree of filtering to be obtained and will be smaller toward the filtrate outflow region with respect to the porosity of the region of inflow of the liquid to be filtered.

Granular filtering elements, such as for example sand, active coals and the like, are also insertable in the various regions, with the advantage that,by virtue of the particular configuration of the filter, it is possible to obtain automatic filling with the granular material simply by mixing the granular filtering element with a liquid and introducing it in the filter, making sure that the successive filtering element, in the direction of flow of the liquid to be filtered, has a lower granulometry or porosity than the granulometry of the material introduced with the liquid, so that the granular material is retained in the preset region, automatically achieving its compaction.

With the described arrangement, by applying an inflow manifold 3 and closing the outflow port 22 of the lower module through a plug 45 as well as applying the outflow manifold 4 which conveniently has a depressed region similar to depressions 9, the liquid to be filtered enters the inflow port of the lower module and can flow to the various modules or pass through said modules, consequently passing through the filtering elements, until the filtered liquid reaches the second port, where the filtered liquid flows out of the filtering elements until it reaches the outflow manifold 4 which is provided with an element for closing its port arranged over the first ports of the stacked modules (or is closed at all at this point and comprises a single outflow port for conveying the filtrate outward).

With the described arrangement, a considerable filtration surface is achieved, taking into account that the various modules are not arranged mutually in series but, on the basis of an electric comparison, with a parallel arrangement, i.e. the liquid to be filtered flows through one of the modules to reach the outflow duct which is in practice defined by the alignment of said second ports of each module and is laterally delimited by the stacked walls 23.

The stacking of a plurality of modules therefore allows to obtain filters which have exchange surfaces which can be varied simply by varying the number of mutually stacked modules.

Another important aspect of the invention is furthermore constituted by the fact that the filter body remains unchanged and is constituted by the assembly of a plurality of modules, which are all identical to one another, whereas the filtering characteristics can be modified simply by modifying the filtering element which is inserted in the various filtering regions.

The invention thus conceived is susceptible to numerous modifications and variations, all of which are within the scope of the inventive concept.

All the details may furthermore be replaced with other technically equivalent elements.

In practice, though the best results are obtained by using plastic material for producing the modules, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A filter body with a plurality of mutually stackable modules (2), characterized in that each of said modules comprises at least one first filtering region (15) which defines a first connection port (10) for the inflow of the fluid to be filtered and is connected to the first filtering region (15) of adjacent stacked modules, and at least one second filtering region (20) which defines a second connecting port (22) for the outflow of the filtered fluid and is connected to the second filtering region of the adjacent stacked modules, said first region (15) and said second region (20) being mutually connected with the interposition of at least one filtering element (50).

2. A filter body, according to claim 1, characterized in that said modules (2) have a substantially cylindrical configuration.

3. A filter body, according to the preceding claims, characterized in that said modules (2) have a depressed annular region (9) at the lower edge for the mutual stacking of said modules.

4. A filter body, according to any of the preceding claims, characterized in that said first port (10) is formed peripherally on the bottom (9a) of said module (2) and is delimited by lateral walls (11) which have an axial extension which is smaller than the axial length of said modules, so as to create connecting openings (12) to said first filtering region (15).

5. A filter body, according to any of the preceding claims, characterized in that said at least one first filtering region (15) comprises a pair of first filtering regions arranged laterally to said port (10) and having the configuration of a portion of annular crown.

6. A filter body, according to any of the preceding claims, characterized in that it comprises an intermediate filtering region (16) delimited by a circular wall (17) connected to said first filtering regions by means of ports (18).

7. A filter body, according to any of the preceding claims, characterized in that said at least one second filtering region (20) comprises two filtering regions arranged laterally to lateral walls (23) which delimit said second port (22) and connected to said intermediate region (16) by means of ports (18) defined on said circular wall (17).

8. A filter body, according to any of the preceding claims, characterized in that said first regions (15) and said second regions (20) are mutually separated by diametrical partitions (30).

9. A filter body, according to any of the preceding claims, characterized in that it comprises, on the lower face (9a) of each module (2), fork-like protrusions (40) which can be arranged astride the diametrical partitions (30) of the underlying module to separate said first regions (15) and said second regions (20).

10. A filter body, according to any of the preceding claims, characterized in that it comprises, at the axial ends of a stack of modules (2), an inflow manifold (3) for the inflow of the fluid to be filtered and an outflow manifold (4), the module (2) at said inflow manifold being provided with a closure plug (45) at said second port (22).

11. A filter body according to any of the preceding claims, characterized in that filtering elements (50) which can be diversified according to the kind of filtration to be performed, can be removably inserted in said regions (15,16,20).

Fig. 6

Fig. 7

Fig. 5

Fig. 4

Fig. 2

Fig. 3

Fig.1

Fig.8

Fig.9